Europäisches Patentamt

European Patent Office

Office européen des brevets

(19)

(11) Veröffentlichungsnummer: **0 195 747 B1**

(12) ## EUROPÄISCHE PATENTSCHRIFT

(45) Veröffentlichungstag der Patentschrift: **28.08.91**

(51) Int. Cl.⁵: **G02B 13/14**

(21) Anmeldenummer: **86810129.6**

(22) Anmeldetag: **14.03.86**

(54) **Lichtstarkes Weitwinkelobjektiv für Infrarot.**

(30) Priorität: **19.03.85 CH 1207/85**

(43) Veröffentlichungstag der Anmeldung:
**24.09.86 Patentblatt 86/39**

(45) Bekanntmachung des Hinweises auf die
Patenterteilung:
**28.08.91 Patentblatt 91/35**

(84) Benannte Vertragsstaaten:
**AT CH DE FR GB LI NL**

(56) Entgegenhaltungen:
**DE-A- 1 472 189**
**FR-A- 2 256 421**
**FR-A- 2 270 607**
**US-A- 3 363 962**
**US-A- 3 433 551**

**APPLIED OPTCS AND OPTICAL ENGINEE-
RING; BY R. KINGSLAKE, NEW YORK AND
LONDON 1965, Seiten 109-110**

(73) Patentinhaber: **DST Deutsche System-Technik
GmbH
Hans-Bredow-Strasse 20
W-2800 Bremen 44(DE)**

(72) Erfinder: **Canzek, Ludvik, Dr.
Quellmattstr. 3
CH-5035 Unterentfelden(CH)**

(74) Vertreter: **Eisenführ, Speiser & Strasse
Martinistrasse 24
W-2800 Bremen 1(DE)**

EP 0 195 747 B1

## Beschreibung

Die Erfindung betrifft ein Objektiv gemäss dem Oberbegriff des Patentanspruchs 1.

Bisher bekannte Infrarotobjektive sind entweder lichtstark und haben einen kleinen Feldwinkel oder sie haben einen grösseren Feldwinkel aber dann eine geringere Lichtstärke.

In DE-A-2519961 ist ein Objektiv mit Lichtstärke 1:1,5 und einem Gesamtfeldwinkel von 8 Grad angegeben. In DE-A-1472189 ist dagegen ein Objektiv beschrieben, das einen Gesamtfeldwinkel 2w = 25 Grad hat, jedoch eine Lichtstärke von nur 1:1,9 aufweist.

Weiter bekannt sind Objektive vom Typ ORTHOMETAR. Ein Beispiel dafür ist gezeigt in Fig. 9c auf Seite 109 im Buch "Applied Optics and Optical Engineering" (New York und London, 1965) von R. Kingslake. Objektive dieser Art werden vorwiegend in der Reproduktionstechnik angewandt. Sie weisen einen Gesamtfeldwinkel bis ca. 70 Grad auf, aber eine Lichtstärke nur bis 1:1,4. Ihre Anwendung im Infrarotbereich ist bisher nicht bekannt. Charakteristisch für diese Objektivart ist, dass die Sammellinsen im objektseitigen und im bildseitigen Teil aus Korrektionsgründen starke Brechkräfte haben. Deswegen müssen diese Linsen sehr dick sein, was aus wirtschaftlicher Sicht sehr nachteilig ist, insbesondere wenn man berücksichtigt, dass das Linsenmaterial für den Infrarotbereich sehr teuer ist. Die Luftabstände in diesen Objektiven sind auch aus Korrekturgründen relativ klein, der grösste solche Abstand ist derjenige, der den Blendenraum umfasst.

Die erwähnten Verhältnisse kann man an einem typischen Beispiel gemäss DE-PS-1258134 demonstrieren. Schon bei einer Lichtstärke von nur 1:5,6 erreichen die Sammellinsen in den äusseren Gliedern eine Dicke bis 0,018*f, der maximale Luftabstand bleibt dagegen unter 0,11*f. Würde man die Lichtstärke in den Bereich von ca. 1:1 steigern, so würden die erwähnten Sammellinsen sehr grosse Dicken erhalten, was aus wirtschaftlicher Sicht sehr nachteilig wäre.

Auch bei Betrachtung weiterer bekannter Objektivformen ergibt sich, dass keines gleichzeitig lichtstark und weitwinkelig ist. Will man einen derartigen Objektivaufbau in wirtschaftlich vertretbarer Form realisieren, so ergibt sich die Notwendigkeit, einen neuen Ansatz zu finden.

Ausgehend vom beschriebenen Stand der Technik liegt der Erfindung die Aufgabe zugrunde, ein Objektiv für Infrarot zu berechnen, welches sowohl lichtstark als auch weitwinkelig ist.

Das diese Aufgabe erfindungsgemäss lösende Objektiv ist in den Patentansprüchen 1 - 4 gekennzeichnet.

Die Erfindung wird nachfolgend anhand der schematischen Zeichnungen und der Datentabellen der Ausführungsbeispiele näher erklärt.

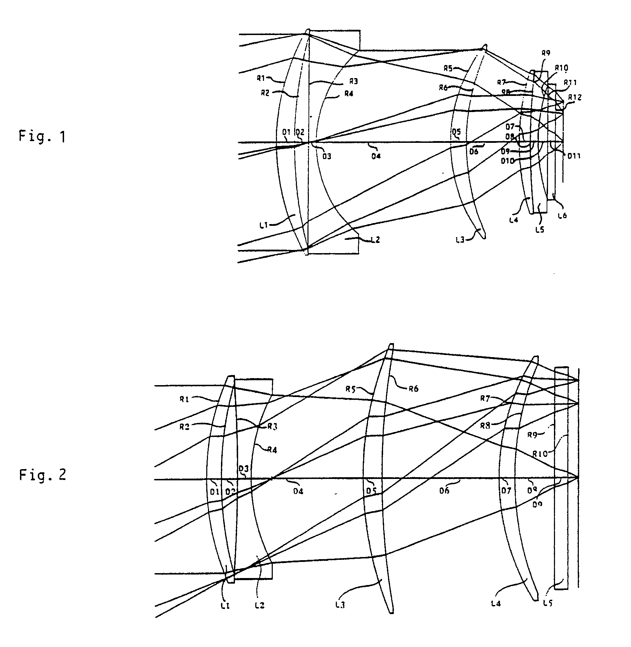

Fig. 1 zeigt schematisch das erfindungsgemässe Objektiv, dessen Daten in den Ansprüchen 1 und 3 angegeben sind, der Fig. 2 entsprechen die Objektivdaten gemäss den Ansprüchen 2 und 4. In Fig. 1 und Fig. 2 bilden die Linsen L1 und L2 den objektseitigen Teil, die Linse L3 den mittleren Teil und die Linse L4 den bildseitigen Teil. Das Objektiv nach Fig. 1 hat im bildseitigen Teil noch eine Linse L5. Die Leistungsdaten der Objektive sind in den Tabellen der Ansprüche 1 bis 4 zu finden.

Die Längenverhältnisse der in den Ansprüchen 1 bis 4 angegebenen Ausführungsbeispiele zeigt die nachfolgende Tabelle:

| Anspruch | Lichtstärke | d4 | d6 | D | d(max) |
|----------|-------------|--------|--------|--------|--------|
| 1 | 1.1 | 0,54*f | 0,52*f | 1,63*f | 0,08*f |
| 2 | 1:1 | 0,42*f | 0,50*f | 1,36*f | 0,11*f |
| 3 | 1:0,7 | 0,44*f | 0,17*f | 0,86*f | 0,06*f |
| 4 | 1:0,7 | 0,63*f | 0,45*f | 1,53*f | 0,08*f |

Aus dieser Tabelle geht hervor, dass hier die maximalen Linsendicken d(max), welche auf den Objektivpreis massgebenden Einfluss haben, klein, die Luftabstände dagegen relativ gross sind. Diese Verhältnisse bei den Objektiven nach den Ansprüchen 1 bis 4 stehen somit genau im Gegensatz zu den Objektiven vom bekannten Typ ORTHOMETAR.

Die in den Ansprüchen tabellierten Beispiele sind für die Infrarotbereiche 2 bis 2,5 μm (Anspruch 4) bzw. 1,5 bis 2,5 μm (Ansprüche 1 bis 3) berechnet und haben auch Linsenmaterialien, die in diesen Bereichen transparent sind.

Die aufgabengemässen Eigenschaften haben alle in den Ansprüchen 1 bis 4 definierten Ausführungs-

2

formen, welche aber auch alle den im Oberbegriff und den in den ersten vier Zeilen des kennzeichnenden Teils definierten Aufbau besitzen. Dieser neue Aufbau diente als Ansatz für den hier beanspruchten Objektivtyp.

**Patentansprüche**

1. Lichtstarkes Objektiv für Infrarot mit der Brennweite f, das aus einem objektseitigen, einem mittleren und einem bildseitigen Teil besteht, wobei der objektseitige Teil mindestens eine Sammellinse und eine Zerstreuungslinse, getrennt durch eine Luftlinse von sammelnder Form, aufweist, der mittlere Teil mindestens eine Sammellinse beinhaltet und der bildseitige Teil aus mindestens einer Sammellinse aufgebaut ist, **gekennzeichnet** durch eine Baulänge des Linsensystems, d.h. durch einen Abstand zwischen der ersten und der letzten Linsenfläche des Objektivs ohne Deckglas kleiner als 2,1*f, durch eine Baulänge des bildseitigen Teiles ohne Deckglas grösser als 0,04*f, und durch folgende, auf Wellenlänge 2,2 um bezogene Daten:

$$f = 200,0 \qquad F = 1:1 \qquad 2w = 60 \text{ Grad}$$

| Fläche Nr. | Radius R | Abstand D | Brechzahl n | Material |
|---|---|---|---|---|
| 1 | 318,62 | 15,0 | 3,4462 | Silizium |
| 2 | 530,78 | 14,0 | 1 | |
| 3 | -1092,26 | 13,0 | 1,4350 | Quazglas |
| 4 | 244,85 | 107,9 | 1 | |
| 5 | 331,46 | 16,6 | 3,4462 | Silizium |
| 6 | 606,32 | 103,5 | 1 | |
| 7 | 223,68 | 15,4 | 3,4462 | Silizium |
| 8 | 297,27 | 26,2 | 1 | |
| 9 | -3030,85 | 14,0 | 1,4350 | Quarzglas |
| 10 | 863,35 | 7,2 | 1 | |
| 11 | ∞ | 12,8 | 1,4350 | Quarzglas |
| 12 | ∞ | | 1 | |

2. Lichtstarkes Objektiv für Infrarot mit der Brennweite f, das aus einem objektseitigen, einem mittleren und einem bildseitigen Teil besteht, wobei der objektseitige Teil mindestens eine Sammellinse und eine Zerstreuungslinse, getrennt durch eine Luftlinse von sammelnder Form, aufweist, der mittlere Teil mindestens eine Sammellinse beinhaltet und der bildseitige Teil aus mindestens einer Sammellinse aufgebaut ist, **gekennzeichnet** durch eine Baulänge des Linsensystems, d.h. durch einen Abstand zwischen der ersten und der letzten Linsenfläche des Objektivs ohne Deckglas kleiner als 2,1*f, durch eine Baulänge des bildseitigen Teiles ohne Deckglas grösser als 0`04*f, und durch folgende, auf Wellenlänge 2,15 $\mu$m bezogene Daten:

f = 200,0     F = 1:1     2w = 52 Grad

| Fläche Nr. | Radius R | Abstand D | Brechzahl n | Material |
|---|---|---|---|---|
| 1 | 240,54 | 14,0 | 3,4477 | Silizium |
| 2 | 372,70 | 24,3 | 1 | |
| 3 | -2632,24 | 13,0 | 1,4358 | Quarzglas |
| 4 | 150,37 | 84,1 | 1 | |
| 5 | 369,28 | 21,0 | 3,4477 | Silizium |
| 6 | 775,86 | 100,9 | 1 | |
| 7 | 260,93 | 15,5 | 3,4477 | Silizium |
| 8 | 387,46 | 35,2 | 1 | |
| 9 | ∞ | 12,8 | 1,4358 | Quarzglas |
| 10 | ∞ | | 1 | |

3. Lichtstarkes Objektiv für Infrarot mit der Brennweite f, das aus einem objektseitigen, einem mittleren und einem bildseitigen Teil besteht, wobei der objektseitige Teil mindestens eine Sammellinse und eine Zerstreuungslinse, getrennt durch eine Luftlinse von sammelnder Form, aufweist, der mittlere Teil mindestens eine Sammellinse beinhaltet und der bildseitige Teil aus mindestens einer Sammellinse aufgebaut ist, **gekennzeichnet** durch eine Baulänge des Linsensystems, d.h. durch einen Abstand zwischen der ersten und der letzten Linsenfläche des Objektivs ohne Deckglas kleiner als 2,1*f, durch eine Baulänge des bildseitigen Teiles ohne Deckglas grösser als 0,04*f, und durch folgende, auf Wellenlänge 2,15 $\mu$m bezogene Daten:

f = 100,0     F = 1:0,7     2w = 30 Grad

| Fläche Nr. | Radius R | Abstand D | Brechzahl n | Material |
|---|---|---|---|---|
| 1 | 146,62 | 11,9 | 3,4477 | Silizium |

| Fläche Nr. | Radius R | Abstand D | Brechzahl n | Material |
|---|---|---|---|---|
| 2 | 266,72 | 9,3 | 1 | |
| 3 | ∞ | 5,0 | 1,4358 | Quarzglas |
| 4 | 77,66 | 88,2 | 1 | |
| 5 | 100,84 | 10,4 | 3,4477 | Silizium |
| 6 | 142,54 | 34,8 | 1 | |
| 7 | 151,52 | 7,4 | 3,4477 | Silizium |
| 8 | 410,47 | 0,4 | 1 | |
| 9 | 473,67 | 5,0 | 1,4358 | Quarzglas |
| 10 | 113,31 | 6,3 | 1 | |
| 11 | ∞ | 5,0 | 1,4358 | Quarzglas |
| 12 | ∞ | | 1 | |

4. Lichtstarkes Objektiv für Infrarot mit der Brennweite f, das aus einem objektseitigen, einem mittleren und einem bildseitigen Teil besteht, wobei der objektseitige Teil mindestens eine Sammellinse und eine Zerstreuungslinse, getrennt durch eine Luftlinse von sammelnder Form, aufweist, der mittlere Teil mindestens eine Sammellinse beinhaltet und der bildseitige Teil aus mindestens einer Sammellinse aufgebaut ist, **gekennzeichnet** durch eine Baulänge des Linsensystems, d.h. durch einen Abstand zwischen der ersten und der letzten Linsenfläche des Objektivs ohne Deckglas kleiner als 2,1*f, durch eine Baulänge des bildseitigen Teiles ohne Deckglas grösser als 0,04*f, und durch folgende, auf Wellenlänge 2,2 $\mu$m bezogene Daten:

$$f = 200,0 \qquad F = 1:0,7 \qquad 2w = 40 \text{ Grad}$$

| Fläche Nr. | Radius R | Abstand D | Brechzahl n | Material |
|---|---|---|---|---|
| 1 | 301,16 | 16,0 | 4,0875 | Germanium |
| 2 | 436,75 | 26,7 | 1 | |
| 3 | -2358,79 | 16,0 | 1,4350 | Quarzglas |
| 4 | 210,08 | 126,8 | 1 | |
| 5 | 244,25 | 16,0 | 4,0875 | Germanium |
| 6 | 341,43 | 89,1 | 1 | |
| 7 | 200,0 | 15,0 | 3,4462 | Silizium |
| 8 | 247,80 | 23,6 | 1 | |

| Fläche Nr. | Radius R | Abstand D | Brechzahl n | Material |
|---|---|---|---|---|
| 9 | ∞ | 12,0 | 1,4350 | Quarzglas |
| 10 | ∞ | | 1 | |

**Claims**

1. A high-power objective for infrared, of focal length f, whioh consists of one part next the object, one part in the centre and one part next the image, where the part next the object exhibits at least one convergent lens and one divergent lens separated by an air lens of convergent shape, the central part contains at least one convergent lens and the part next the image is built up of at least one convergent lens, characterized by an overall length of the lens system i.e., by a distance between the first and last faces of the lenses of the objective without the cover glass, less than 2.1xf, by an overall length of the part next the image, without the cover glass, greater than 0.04xf, and by the following data referred to a wavelength of 2.3 $\mu$m:

5

| Face No. | f = 200.0 Radius R | F = 1:1 Distance D | 2w = 60 degrees Refractive Index n | Material |
|---|---|---|---|---|
| . | . | . | . | . |
| 2 | 530,78 | 14,0 | 1 | Quartz glass |
| 3 | -1092,26 | 13,0 | 1,4350 | |
| 4 | 244,85 | 107,9 | 1 | |
| 5 | 331,46 | 16,6 | 3,4462 | Silicon |
| 6 | 606,32 | 103,5 | 1 | |
| 7 | 223,68 | 15,4 | 3,4462 | Silicon |
| 8 | 297,27 | 26,2 | 1 | Quartz glass |
| 9 | -3030,85 | 14,0 | 1,4350 | |
| 10 | 863,35 | 7,2 | 1 | Quartz glass |
| 11 | ∞ | 12,8 | 1,4350 | |
| 12 | ∞ | | 1 | |

2. A high-power objective for infrared, of focal length f. which consists of one part next the object, one part in the centre and one part next the image, where the part next the object exhibits at least one convergent lens and one divergent lens separated by an air lens of convergent shape, the central part contains at least one convergent lens and the part next the image is built up of at least one convergent lens, characterized by an overall length of the lens system, i.e., by a distance between the first and last faces of the lenses of the objective without the cover glass, less than 2.1×f, by an overall length of the part next the image, without the cover glass greater than 0.04×f, and by the following data referred to a wavelength of 2.15 $\mu$m;

| Face No. | f = 200.0 Radius R | F = 1:1 Distance D | 2w = 52 degrees Refractive Index n | Material |
|---|---|---|---|---|
| 1 | 240,54 | 14,0 | 3,4477 | Silicon |
| 2 | 372,70 | 24,3 | 1 | Quartz glass |
| 3 | -2632,24 | 13,0 | 1,4358 | |
| 4 | 150,37 | 84,1 | 1 | |
| 5 | 369,28 | 21,0 | 3,4477 | Silicon |
| 6 | 775,86 | 100,9 | 1 | |
| 7 | 260,93 | 15,5 | 3,4477 | Silicon |
| 8 | 387,46 | 35,2 | 1 | Quartz glass |
| 9 | ∞ | 12,8 | 1,4358 | |
| 10 | ∞ | | 1 | |

3. A high-power objective for infrared, of focal length f, which consists of one part next the object, one part in the centre and one part next the image, where the part next the object exhibits at least one convergent lens and one divergent lens separated by an air lens of convergent shape, the central part contains at least one convergent lens and the part next the image is built up of at least one convergent lens, characterized by an overall length of the lens system, i.e., by a distance between the first and last faces of the lenses of the objective without the cover glass, less than 2.1×f, by an overall length of the part next the image, without the cover glass, greater than 0.04×f, and by the following data referred to a wavelength of 2.15 μm;

f = 100.0     F = 1:0.7     2w = 30 degrees

| Face No. | Radius R | Distance D | Refractive Index n | Material |
|---|---|---|---|---|
| 1 | 146.62 | 11.9 | 3.4477 | Silicon |

| Face No. | Radius R | Distance D | Refractive Index n | Material |
|---|---|---|---|---|
| 2 | 266,72 | 9,3 | 1 | Quartz glass |
| 3 | ∞ | 5,0 | 1,4358 | Quartz glass |
| 4 | 77,66 | 88,2 | 1 | |
| 5 | 100,84 | 10,4 | 3,4477 | Silicon |
| 6 | 142,54 | 34,8 | 1 | |
| 7 | 151,52 | 7,4 | 3,4477 | Silicon |
| 8 | 410,47 | 0,4 | 1 | Quartz glass |
| 9 | 473,67 | 5,0 | 1,4358 | Quartz glass |
| 10 | 113,31 | 6,3 | 1 | |
| 11 | ∞ | 5,0 | 1,4358 | Quartz glass |
| 12 | ∞ | | 1 | |

4. A high-power objective for infrared, of focal length f, which consists of one part next the object, one part in the centre and one part next the image, where the part next the object exhibits at least one convergent lens and one divergent lens separated by an air lens Of convergent shape, the central part contains at least one convergent lens and the part next the image is built up of at least one convergent lens, characterized by an overall length of the lens system, i.e., by a distance between the first and last faces of the lenses of the objective without the cover glass, less than 2.1×f, by an overall length of the part next the image, without the cover glass, greater than 0.04×f, and by the following data referred to a wavelength of 2.2 μm:

7

f = 200.0          F = 1:0.7          2w = 40 degrees

| Face No. | Radius R | Distance D | Refractive Index n | Material |
|---|---|---|---|---|
| 1 | 301,16 | 16,0 | 4,0875 | Germanium |
| 2 | 436,75 | 26,7 | 1 | Quartz glass |
| 3 | -2358,79 | 16,0 | 1,4350 | |
| 4 | 210,08 | 126,8 | 1 | |
| 5 | 244,25 | 16,0 | 4,0875 | Germanium |
| 6 | 341,43 | 89,1 | 1 | |
| 7 | 200,0 | 15,0 | 3,4462 | Silicon |

| Face No. | Radius R | Distance D | Refractive Index n | Material |
|---|---|---|---|---|
| 8 | 247,80 | 23,6 | 1 | |
| 9 | - | 12,0 | 1,4350 | Quartz glass |
| 10 | - | | 1 | |

## Revendications

1. Objectif à grand angle, à grande ouverture pour rayonnement infrarouge de distance focale f, se composant d'une partie côté objectif, d'une partie médiane et d'une partie côté image, la partie côté objectif comportant au moins une lentille convergente et une lentille divergente, séparées par une lentille d'air de forme convexe, la partie centrale comportant au moins une lentille convexe et la partie côté image étant constituée par au moins une lentille convexe, caractérisé par une longueur de structure du système de lentille, c'est-à-dire par une distance entre la première et la dernière surface de lentille de l'objectif sans verre de recouvrement, inférieure à 2,1 * f, par une longueur de structure de la partie côté image, sans verre de recouvrement, supérieure à 0,04 * f, et par les données suivantes, concernant une longueur d'onde de 2,2 μm :

f = 200,0    F = 1:1    2w = 60 degrés

| Surface N° | Rayon R | Distance D | Indice de Réfraction | Matière |
|---|---|---|---|---|
| 1 | 318,62 | 15,0 | 3,4462 | Silicium |
| 2 | 530,78 | 14,0 | 1 | |
| 3 | -1092,26 | 13,0 | 1,4350 | Quartz |
| 4 | 244,85 | 107,9 | 1 | |
| 5 | 331,46 | 16,6 | 3,4462 | Silicium |
| 6 | 606,32 | 103,5 | 1 | |
| 7 | 223,68 | 15,4 | 3,4462 | Silicium |
| 8 | 297,27 | 26,2 | 1 | |
| 9 | -3030,85 | 14,0 | 1,4350 | Quartz |
| 10 | 863,35 | 7,2 | 1 | |
| 11 | ∞ | 12,8 | 1,4350 | Quartz |
| 12 | ∞ | | 1 | |

2. objectif à grand angle, à grande ouverture pour rayonnement infrarouge de distance locale f, se composant d'une partie côté objectif, d'une partie médiane et d'une partie côté image, la partie côté objectif comportant au moins une lentille convergente et une lentille divergente, séparées par une lentille d'air de forme convexe, la partie centrale comportant au moins une lentille convexe et la partie côté image étant constituée par au moins une lentille convexe, caractérisé par une longueur de structure du système de lentille, c'est-à-dire par une distance entre la première et la dernière surface de lentille de l'objectif sans verre de recouvrement, inférieure à 2,1 * f, par une longueur de structure de la partie côté image, sans verre de recouvrement, supérieure à 0,04 * f, et par les données suivantes, concernant une longueur d'onde de 2,15 $\mu$m :

f = 200,0    F = 1:1    2w = 52 degrés

| Surface N° | Rayon R | Distance D | Indice de Réfraction | Matière |
|---|---|---|---|---|
| 1 | 240,54 | 14,0 | 3,4477 | Silicium |
| 2 | 372,70 | 24,3 | 1 | |
| 3 | -2632,24 | 13,0 | 1,4358 | Quartz |
| 4 | 150,37 | 84,1 | 1 | |
| 5 | 369,28 | 21,0 | 3,4477 | Silicium |
| 6 | 775,86 | 100,9 | 1 | |
| 7 | 260,93 | 15,5 | 3,4477 | Silicium |
| 8 | 387,46 | 35,2 | 1 | |
| 9 | ∞ | 12,8 | 1,4358 | Quartz |
| 10 | ∞ | | 1 | |

3. objectif à grand angle, à grande ouverture pour rayonnement infrarouge de distance focale f, se composent d'une partie côté objectif, d'une partie médiane et d'une partie côté image, la partie côté objectif comportant au moins une lentille convergente et une lentille divergente, séparées par une lentille d'air de forme convexe, la partie centrale comportant au moins une lentille convexe et la partie côté image étant constituée par au moins une lentille convexe, caractérisé par une longueur de structure du système de lentille, c'est-à-dire par une distance entre la première et la dernière surface de lentille de l'objectif sans verre de recouvrement, inférieure à 2,1 * f, par une longueur de structure de la partie côté image, sans verre de recouvrement, supérieure à 0,04 * f, et par les données suivantes, concernant une longueur d'onde de 2,15 µm :

f = 100,0    F = 1:0,7    2w = 30 degrés

| Surface N° | Rayon R | Distance D | Indice de Réfraction | Matière |
|---|---|---|---|---|
| 2 | 266,72 | 9,3 | 1 | Silicium |
| 3 | ∞ | 5,0 | 1,4358 | |
| 4 | 77,66 | 88,2 | 1 | Quartz |
| 5 | 100,84 | 10,4 | 3,4477 | |
| 6 | 142,54 | 34,8 | 1 | Silicium |
| 7 | 151,52 | 7,4 | 3,4477 | |
| 8 | 410,47 | 0,4 | 1 | Silicium |
| 9 | 473,67 | 5,0 | 1,4358 | |
| 10 | 113,31 | 6,3 | 1 | Quartz |
| 11 | ∞ | 5,0 | 1,4358 | |
| 12 | ∞ | | 1 | Quartz |

4. Objectif à grand angle, à grande ouverture pour rayonnement infrarouge de distance focale f, se composant d'une partie côté objectif, d'une partie médiane et d'une partie côté image, la partie côté objectif comportant eu moins une lentille convergente et une lentille divergente, séparées par une lentille d'air de forme convexe, la partie centrale comportant au moins une lentille convexe et la partie côté image étant constituée par au moins une lentille convexe, caractérisé par une longueur de structure du système de lentille, c'est-à-dire par une distance entre la première et la dernière surface de lentille de l'objectif sans verre de recouvrement, inférieure à 2,1 * f, par une longueur de structure de la partie côté image, sans verre de recouvrement, supérieure à 0,04 * f, et par les données suivantes, concernant une longueur d'onde de 2,2 µm :

f = 200,0    F = 1:0,7    2w = 40 degrés

| Surface N° | Rayon R | Distance D | Indice de Réfraction | Matière |
|---|---|---|---|---|
| 1 | 301,16 | 16,0 | 4,0875 | Germanium |
| 2 | 436,75 | 26,7 | 1 | |
| 3 | -2358,79 | 16,0 | 1,4350 | |
| 4 | 210,08 | 126,8 | 1 | Quartz |
| 5 | 244,25 | 16,0 | 4,0875 | |
| 6 | 341,43 | 89,1 | 1 | Germanium |
| 7 | 200,0 | 15,0 | 3,4462 | |
| 8 | 247,80 | 23,6 | 1 | Silicium |
| 9 | ∞ | 12,0 | 1,4350 | |
| 10 | ∞ | | 1 | Quartz |

| Face No. | Radius R | Distance D | Refractive Index n | Material |
|---|---|---|---|---|
| 8 | 247,80 | 23,6 | 1 | |
| 9 | - | 12,0 | 1,4350 | Quartz glass |
| 10 | - | | 1 | |

Fig. 1

Fig. 2